# EUROPÄISCHE PATENTANMELDUNG

(11) **EP 4 474 206 A1**
(43) Veröffentlichungstag der Anmeldung: **11.12.2024**
(21) Anmeldenummer: 24175235.1
(22) Anmeldetag: 10.05.2024
(51) Int. Cl.: B60L 53/35, B60L 53/37

(54) **GESTEUERTE BEREITSTELLUNG UND VERSTAUUNG VON LADEKABELN**

(30) Priorität: 08.06.2023 DE 102023205350
(71) Anmelder: Siemens Aktiengesellschaft, 80333 München (DE)
(72) Erfinder: Perras, Stefan, 82223 Eichenau (DE); Völkl, Albert, 80687 München (DE)
(74) Vertreter: Siemens Patent Attorneys

(57) **Zusammenfassung**

Die vorliegende Erfindung betrifft eine Vorrichtung (100) zum Bereitstellen eines Ladekabels (101) für ein Fahrzeug (150). Die Vorrichtung weist eine Trägerstruktur (103) auf, welche an einer Ladezone (104) zum Laden eines Fahrzeugs (150) angeordnet ist, und ein Ladekabel (101), welches an eine Elektrizitätsquelle anschließbar ist und einen Ladestecker (102) zum Anstecken an einem zu ladenden Fahrzeug (150) aufweist, wobei das Ladekabel (101) an der Trägerstruktur (103) befestigt ist. Die Vorrichtung (100) weist ferner eine Kabelsteuervorrichtung (110) mit einem Kabelsteuerelement (111) auf, welches mit dem Ladekabel (101) derart gekoppelt ist, dass das Ladekabel (101) relativ zur Trägerstruktur (103) bewegbar ist, um den Ladestecker (102) in der Ladezone (104) zu positionieren. Ferner weist die Vorrichtung (100) eine Sensorvorrichtung (106) zum Detektieren einer Ladesituation in der Ladezone (104) zum Laden eines Fahrzeugs (150) auf, wobei die Sensorvorrichtung (106) derart mit der Kabelsteuervorrichtung (110) gekoppelt ist, dass das Kabelsteuerelement (111) steuerbar ist, um den Ladestecker (102) in der Ladezone (104) basierend auf der detektierten Ladesituation in der Ladezone (104) zu positionieren.

## Beschreibung

### Technisches Gebiet

Die vorliegende Erfindung betrifft eine Vorrichtung und ein Verfahren zum Bereitstellen eines Ladekabels basierend auf einem Belegungszustand einer Ladezone mit einem Fahrzeug.

### Hintergrund der Erfindung

Neben der Elektrifizierung von kleineren Fahrzeugen, wie beispielsweise PKWs, wird ebenfalls die Elektrifizierung von Nutzfahrzeugen, wie beispielsweise von Lastkraftwagen, angestrebt. Der Betrieb von Nutzfahrzeugen ist sehr kostengetrieben, weshalb bei deren Elektrifizierung zusätzliche Standzeiten durch Ladepausen für die Hochvoltbatterie vermieden werden sollen. Aus diesem Grund ist es vorteilhaft, beispielsweise an den Be- und Entladeplätzen von LKWs eine Ladeinfrastruktur aufzubauen. Da in LKW- bzw. Busdepots häufig wenig Platz zum Rangieren vorgesehen wird, besteht eine Gefahr der Beschädigung von Ladesäulen oder Ladungsverteilern (Dispensern) durch Rangiermanöver und damit des Ausfalls der Ladepunkte.

Eine Möglichkeit, das Risiko von Beschädigungen zu reduzieren, ist die Anbringung des Dispensers oder der Ladesäule in ausreichendem Abstand über der Fahrbahn. Das Kabelmanagement der Ladekabel stellt in diesem Fall jedoch eine besondere Herausforderung dar, da das Ladekabel in den Rangierbereich des LKWs reichen muss und auch der Ladestecker beziehungsweise das Ladekabel ebenfalls nicht dem Risiko einer Beschädigung ausgesetzt werden soll.

Es kommt häufig vor, dass nach einem Ladevorgang eines LKWs das Kabelmanagement nicht korrekt betätigt wird und das Ladekabel sich noch im Gefahrenbereich bzw. in der Ladezone an dem LKW befindet. Verlässt der geladene LKW die Ladezone oder fährt ein neuer LKW in die Ladezone ein, kann es daher zu Beschädigungen des Ladesteckers, des Ladekabels oder des LKWs selbst kommen.

### Darstellung der Erfindung

Es ist eine Aufgabe der vorliegenden Erfindung, Techniken für eine verbesserte Bereitstellung eines Ladekabels einzuführen.

Die Aufgabe wird durch eine Vorrichtung und ein Verfahren zum Bereitstellen eines Ladekabels für ein Fahrzeug gemäß den unabhängigen Ansprüchen gelöst.

Gemäß einem ersten Aspekt der vorliegenden Erfindung wird eine Vorrichtung zum Bereitstellen eines Ladekabels für ein Fahrzeug beschrieben. Die Vorrichtung weist eine Trägerstruktur auf, welche dazu ausgebildet ist, an einer Ladezone zum Laden eines Fahrzeugs angeordnet zu werden. Ferner weist die Vorrichtung ein Ladekabel auf, welches mit einer Elektrizitätsquelle verbunden oder verbindbar ist und einen Ladestecker zum Anstecken an ein zu ladendes Fahrzeug aufweist, wobei das Ladekabel an der Trägerstruktur befestigt ist. Die Vorrichtung weist ferner eine Kabelsteuervorrichtung mit einem Kabelsteuerelement auf, welches mit dem Ladekabel derart gekoppelt ist, dass das Ladekabel relativ zur Trägerstruktur bewegbar ist, um den Ladestecker in der Ladezone zu positionieren.

Ferner weist die Vorrichtung eine Sensorvorrichtung zum Detektieren einer Ladesituation in der Ladezone zum Laden eines Fahrzeugs auf, wobei die Sensorvorrichtung derart mit der Kabelsteuervorrichtung gekoppelt ist, dass das Kabelsteuerelement steuerbar ist, um den Ladestecker in der Ladezone basierend auf der detektierten Ladesituation in der Ladezone zu positionieren.

Gemäß einem weiteren Aspekt wird ein Verfahren zum Bereitstellen eines Ladekabels für ein Fahrzeug mit einer oben beschriebenen Vorrichtung präsentiert. Das Verfahren weist wenigstens Schrittes des Detektierens einer Ladesituation in der Ladezone zum Laden eines Fahrzeugs mittels der Sensorvorrichtung und des Positionierens des Ladesteckers in der Ladezone basierend auf der detektierten Ladesituation in der Ladezone mittels des Kabelsteuerelements auf.

Das Fahrzeug kann dabei ein elektrisch betriebenes Fahrzeug, beispielsweise ein rein elektrisch betriebenes Fahrzeug oder ein Hybridfahrzeug, sein, welches einen wiederaufladbaren Ackumulator aufweist. Das Fahrzeug weist insbesondere eine Ladebuchse auf, an welcher der Ladestecker des Ladekabels einsteckbar ist. Das Fahrzeug ist beispielsweise ein elektrisch betriebener Pkw oder ein Nutzfahrzeug, wie beispielsweise ein LKW, ein Bus, eine Baumaschine oder eine Landkraftmaschine.

Die Ladezone beschreibt einen Bereich des Bodens, in welchem das Ladekabel bewegt werden kann, um an das Fahrzeug gekoppelt zu werden und das Fahrzeug zu laden. Die Ladezone weist dabei eine vorbestimmte Fläche am Boden auf, wobei ein Anstecken des Ladesteckers an das Fahrzeug nur in der Ladezone vorgesehen ist.

Die Trägerstruktur dient zum Befestigen der Vorrichtungskomponenten an einem Gebäude oder an einem Boden. Die Trägerstruktur trägt insbesondere das Ladekabel. Ferner kann an der Trägerstruktur die Kabelsteuervorrichtung mit dem entsprechenden Kabelsteuerelement vorgesehen werden. Ferner können Sensorelemente der Sensorvorrichtung zum Detektieren der Ladesituation angeordnet werden. In einer weiteren beispielhaften Ausführungsform ist an der Trägerstruktur eine Elektrizitätsquelle und/oder ein Ladeverteiler (Dispenser) angeordnet, an welchen das Ladekabel gekoppelt ist. Die Trägerstruktur ist beispielsweise als Bodenstütze und/oder als Querbalken ausgebildet.

Die Kabelsteuervorrichtung weist ein oder mehrere Kabelsteuerelemente auf. Das Kabelsteuerelement ist mit dem Ladekabel gekoppelt und kann das Ladekabel relativ zur Trägerstruktur bewegen. Dabei ist das Kabelsteuerelement derart ausgebildet, dass Bereiche des Ladekabels, insbesondere der Ladestecker, von außerhalb in die Ladezone selbst befördert werden können und zudem das Ladekabel und entsprechend der Ladestecker zu einer gewünschten Position innerhalb der Ladezone befördert und positioniert werden kann. Das Kabelsteuerelement kann, wie im Folgenden beschrieben, eine Steuerstange darstellen, welche schwenkbar zum Beispiel an der Trägerstruktur befestigt ist. Ferner kann die Steuerstange in ihrer Länge einstellbar sein. In einer weiteren, im Folgenden beschriebenen beispielhaften Ausführungsform kann die Kabelsteuervorrichtung eine Seilzugvorrichtung und das Kabelsteuerelement beispielsweise ein Trägerseil darstellen.

Die Sensorvorrichtung ist zum Detektieren einer Ladesituation in der Ladezone zum Laden eines Fahrzeugs ausgebildet. Die Ladesituation beschreibt beispielsweise in einem ersten Aspekt, ob ein Fahrzeug in der Ladezone positioniert ist, oder ob sich kein Fahrzeug in der Ladezone befindet. Ferner definiert die Ladesituation gemäß einem weiteren Aspekt beispielsweise die Ausrichtung und die Position des Fahrzeugs innerhalb der Ladezone. Ferner kann gemäß einem weiteren Aspekt die Ladesituation einen Ladezustand in der Ladezone beschreiben, beispielsweise ob gerade ein Stromfluss zwischen dem Ladestecker und dem Fahrzeug vorliegt oder ob allgemein eine mechanische Kopplung zwischen dem Ladestecker und einer Ladebuchse des Fahrzeugs vorliegt. Vorzugsweise beschreibt die Ladesituation die Position und Ausrichtung eines Fahrzeugs, so dass die Sensorvorrichtung ausgebildet ist, diese Position und Ausrichtung des Fahrzeugs zu detektieren.

Die Sensorvorrichtung kann entsprechend eine, mehrere oder alle der oben beschriebenen Ladesituationen detektieren. Hierfür weist die Sensorvorrichtung beispielsweise geeignete Sensoren auf, die beispielhaft im Folgenden beschrieben werden.

Insbesondere ist die Sensorvorrichtung derart mit der Kabelsteuervorrichtung gekoppelt, dass basierend auf der detektierten Ladesituation (und entsprechend der aktuellen IstPosition des Ladekabels) das Ladekabel bzw. der Ladestecker in der Ladezone positioniert werden kann.

Stellt die Sensorvorrichtung beispielsweise fest, dass ein Fahrzeug in der Ladezone positioniert und entsprechend zum Laden bereit ist, kann die Sensorvorrichtung die entsprechenden Sensordaten an die Kabelsteuervorrichtung weitergeben, damit die Kabelsteuervorrichtung entsprechend das Ladekabel bzw. den Ladestecker von außerhalb in die Ladezone hinein befördert. In dem konkret beschriebenen Beispiel kann sichergestellt werden, dass während dem Einfahren und Rangieren des Fahrzeugs innerhalb der Ladezone der Ladestecker und das Ladekabel außerhalb der Ladezone platziert werden kann, damit das Risiko einer Beschädigung des Ladekabels aufgrund des rangierenden Fahrzeugs reduziert wird. Erst wenn die Sensorvorrichtung feststellt, dass das Fahrzeug in der Ladezone ruhend positioniert ist, fährt die Kabelsteuervorrichtung das Ladekabel bzw. den Ladestecker in die Ladezone ein.

Hierfür kann die Kabelsteuervorrichtung selbst mit der Sensorvorrichtung gekoppelt werden und die Sensordaten verarbeiten. Ferner kann eine gemeinsame Steuereinheit angeordnet werden, an welcher die Kabelsteuervorrichtung und die Sensorvorrichtung gekoppelt sind. Die Steuereinheit kann entsprechende Sensorsignale von der Sensorvorrichtung erhalten und verarbeiten. Basierend darauf kann die Steuereinheit mit der Kabelsteuervorrichtung gekoppelt sein, um Steuersignale an die Kabelsteuerelemente zu übertragen, um diese zu steuern und entsprechend einzustellen. Die Steuereinheit kann zentral beispielsweise an der Trägerstruktur angeordnet sein.

Mit der Steuerung der Kabelsteuervorrichtung basierend auf der Sensorvorrichtung, welche eine Ladesituation detektiert, kann das Risiko von Beschädigungen des Ladekabels beim Rangieren bzw. Positionieren des Fahrzeugs erheblich reduziert werden. In gefährlichen Situationen, beispielsweise in welchen das Fahrzeug rangiert, kann die Kabelsteuervorrichtung das Ladekabel an einem sicheren Ort innerhalb der Ladezone oder aus der Ladezone hinaus positionieren. Gleichzeitig kann eine Verfügbarkeit des Ladesteckers gewährleistet werden, wenn bei einer detektierten sicheren Ladesituation der Ladestecker mittels der Kabelsteuervorrichtung in der Ladezone platziert wird. Eine menschliche Interaktion bzw. das Risiko eines Fehlverhaltens eines Benutzers kann reduziert werden, da die Kabelsteuervorrichtung allein basierend auf den Sensordaten selbsttätig bzw. automatisch gesteuert werden kann.

Gemäß einer weiteren beispielhaften Ausführungsform beschreibt die Ladesituation einen Belegungszustand, ob sich ein Fahrzeug in der Ladezone befindet oder ob die Ladezone frei von einem Fahrzeug ist. Die Sensorvorrichtung ist konfiguriert, die Belegung der Ladezone mit dem Fahrzeug zu bestimmen und basierend auf dem Belegungszustand die Kabelsteuervorrichtung steuert. Wenn sich somit kein Fahrzeug in der Ladezone befindet, wird das Ladekabel und der Ladestecker aus der Ladezone herausgefahren und entsprechend in einem inaktiven Zustand geparkt. Erst wenn ein Fahrzeug im Inneren der Ladezone positioniert ist, steuert die Kabelsteuervorrichtung das Ladekabel in die Ladezone. Während des Rangierens eines Fahrzeugs in der Ladezone wird somit das Risiko einer Beschädigung verringert, da das Ladekabel außerhalb der Ladezone in einer inaktiven Position geparkt wird.

Gemäß einer weiteren beispielhaften Ausführungsform ist die Sensorvorrichtung konfiguriert, die Position und Ausrichtung des Fahrzeugs, insbesondere einer Ladebuchse des Fahrzeugs, in der Ladezone zu bestimmen und basierend auf der Position und Ausrichtung des Fahrzeugs die Kabelsteuervorrichtung derart steuert, dass die Position des Ladesteckers relativ zu der Position des Fahrzeugs einstellbar ist. Beispielsweise kann anhand der festgestellten Ausrichtungsposition des Fahrzeugs in der Ladezone der Ladestecker mittels der Kabelsteuervorrichtung bereits in die Nähe der Ladebuchse des Fahrzeugs befördert werden, so dass der Benutzer schnell und einfach den Ladestecker greifen kann und in die Ladebuchse einstecken kann.

Gemäß einer weiteren beispielhaften Ausführungsform weist die Sensorvorrichtung einen Gewichtssensor auf, welcher in einem Bodenbereich der Ladezone installierbar ist. Der Gewichtssensor ist konfiguriert mittels Gewichtsmessung des Fahrzeugs einen Belegungszustand der Ladezone mit dem Fahrzeug zu bestimmen, und/oder die Position und Ausrichtung des Fahrzeugs in der Ladezone zu bestimmen. Beispielsweise kann der Gewichtssensor in einer vorbestimmten Position in der Ladezone im Boden integriert sein. Der Fahrer eines zu ladenden Fahrzeugs kann instruiert werden, das Fahrzeug in eine exakte Parkposition in der Ladezone zu befördern, so dass dann sichergestellt ist, dass zumindest ein Reifen des Fahrzeugs auf dem Gewichtsensor aufliegt, so dass diese einen Belegungszustand feststellen kann.

Ferner können eine Vielzahl von Gewichtssensoren in dem Boden der Ladezone angeordnet sein, so dass eine Matrix an Gewichtssensoren vorliegt. Die Sensorvorrichtung bzw. die Steuereinheit kann den genauen Ort eines Gewichtssensors innerhalb der Matrix bestimmen. Wird nun ein Fahrzeug in einer beliebigen Ausrichtung in der Ladezone positioniert, so kann zumindest ein Reifen oder können mehrere Reifen des Fahrzeugs einem bestimmten Gewichtsensor, der ein entsprechendes Gewicht misst, zugeordnet werden. Entsprechend kann neben dem reinen Belegungszustand der Ladezone auch die Ausrichtung und Position des Fahrzeugs innerhalb der Ladezone basierend auf der Matrix an Gewichtssensoren bestimmt werden.

Gemäß einer weiteren beispielhaften Ausführungsform weist die Sensorvorrichtung einen kapazitiven Sensor auf, welcher in einem Bodenbereich der Ladezone installierbar ist. Der kapazitive Sensor ist konfiguriert auf Basis der Veränderung einer elektrischen Kapazität (bzw. des elektrischen Feldes) einen Belegungszustand der Ladezone mit dem Fahrzeug zu bestimmen, und/oder die Position und Ausrichtung des Fahrzeugs in der Ladezone zu bestimmen. Befindet sich ein Fahrzeug in der Nähe des kapazitiven Sensors, insbesondere genau über dem kapazitiven Sensor, so ändert sich das elektrische Feld und das Vorhandensein eines Fahrzeugs, wie auch eine Ausrichtung des Fahrzeugs innerhalb der Ladezone bestimmt werden kann.

Gemäß einer weiteren beispielhaften Ausführungsform weist die Sensorvorrichtung eine Lichtquelle und einen Lichtsensor zum Ausbilden einer Lichtschranke auf, wobei die Lichtquelle und der Lichtsensor konfiguriert sind einen Belegungszustand der Ladezone mit dem Fahrzeug zu bestimmen, und/oder die Position und Ausrichtung des Fahrzeugs in der Ladezone zu bestimmen. Die Lichtschranke kann beispielsweise quer zu einer Einfahrrichtung des Fahrzeugs in die Ladezone ausgerichtet sein. Durchfährt das Fahrzeug die Lichtschranke und bleibt insbesondere zwischen dem Lichtsensor und der Lichtquelle stehen, so kann ein Belegungszustand der Ladezone festgestellt werden. Ferner kann auch eine Vielzahl von Lichtschranken, insbesondere ein bestimmtes Muster an Lichtschranken, angeordnet werden, um somit die gesamte Ladezone zu bedenken. In einer solchen Ausführungsform kann neben dem reinen Belegungszustand ebenfalls die exakte Position des Fahrzeugs basierend auf den durchtrennten Lichtschranken innerhalb der Ladezone bestimmt werden.

Gemäß einer weiteren beispielhaften Ausführungsform weist die Sensorvorrichtung einen Radarsensor auf, wobei der Radarsensor konfiguriert ist, einen Belegungszustand der Ladezone mit dem Fahrzeug zu bestimmen, und/oder die Position und Ausrichtung des Fahrzeugs in der Ladezone zu bestimmen. Der Radarsensor kann basierend auf Laufzeitmessung von ausgesendeten und am Fahrzeug reflektierten Radarwellen die Belegungszustand der Ladezone wie auch die Positionierung des Fahrzeugs innerhalb der Ladezone bestimmen. Beispielsweise kann ebenfalls eine Lidar-Vorrichtung aufgespannt werden, um die Ladezone als Sensorfeld abzudecken.

Gemäß einer weiteren beispielhaften Ausführungsform weist die Sensorvorrichtung einen optischen Sensor auf. Der optische Sensor ist konfiguriert, einen Belegungszustand der Ladezone mit dem Fahrzeug zu bestimmen, und/oder die Position und Ausrichtung des Fahrzeugs in der Ladezone zu bestimmen. Der optische Sensor kann beispielsweise die Lichtkontraste aufnehmen und basierend darauf die Belegung des Fahrzeugs in der Ladezone bestimmen. Insbesondere ist der optische Sensor eine Kamera, welche ein Abbild der Ladezone oder Videosequenzen der Ladezone aufnimmt. Basierend auf den Bilddaten der Kamera kann der Belegungszustand der Ladezone bestimmt werden.

In einer beispielhaften Ausführungsform weist die Sensorvorrichtung eine Bildverarbeitungsvorrichtung auf, welche konfiguriert ist, basierend auf einer Bildanalyse eine Ladebuchse des Fahrzeugs zu erkennen und basierend darauf die Kabelsteuervorrichtung zu steuern. Die Bildverarbeitungsvorrichtung kann beispielsweise über Kontrastwertanalyse Konturen, die indikativ für ein Fahrzeug sind, erkennen und basierend darauf einen Belegungszustand der Ladezone bestimmen. Insbesondere kann die Bildverarbeitungsvorrichtung anhand der aufgenommenen Bilddaten beispielsweise eine Ladebuchse bzw. eine Verschlussklappe einer Ladebuchse eines Fahrzeugs bestimmen, so dass basierend darauf die Kabelsteuervorrichtung den Ladestecker bereits in der Nähe der Ladebuchse positionieren kann.

Dabei kann die Bildverarbeitungsvorrichtung auf Datenbanken zurückgreifen, welche Fahrzeugdaten enthalten, die beispielsweise optische Erkennungsdaten oder Positionsdaten einer solchen Verschlussklappe bzw. der Ladebuchse eines bestimmten Fahrzeugs vorgeben. Alternativ kann mittels Methoden der künstlichen Intelligenz die Bildverarbeitungsvorrichtung die Verschlussklappe bzw. die Ladebuchse erkennen.

Gemäß einer weiteren beispielhaften Ausführungsform beschreibt die Ladesituation einen Ladezustand zwischen dem Ladestecker und dem Fahrzeug, wobei der Ladezustand eine Kopplung des Ladesteckers mit dem Fahrzeug und/oder einen Ladungsstromfluss zwischen dem Ladestecker und dem Fahrzeug definiert. Die Sensorvorrichtung ist konfiguriert, den Ladezustand zu bestimmen und basierend auf dem Ladezustand die Kabelsteuervorrichtung zu steuern. Beispielsweise kann die Sensorvorrichtung ausgebildet sein, eine mechanische Kopplung zwischen dem Ladestecker und der Ladebuchse festzustellen.

Gemäß einer weiteren beispielhaften Ausführungsform weist die Sensorvorrichtung zum Bestimmen des Ladezustands einen Stromsensor auf, welcher einen Stromfluss zwischen dem Ladestecker und dem Fahrzeug bestimmt. Findet beispielsweise ein Stromfluss zwischen dem Ladestecker und dem Fahrzeug statt, so kann davon ausgegangen werden, dass die Ladezone mit einem Fahrzeug belegt ist. Ferner kann eine Sicherungsfunktion dargestellt werden, wonach eine Bewegung des Ladekabels mittels der Kabelsteuervorrichtung bei Ladung des Fahrzeugs unterbunden wird.

Gemäß einer weiteren beispielhaften Ausführungsform weist die Sensorvorrichtung einen Kontaktsensor zum Detektieren einer (mechanischen) Kopplung zwischen dem Ladestecker und dem Fahrzeug auf. Mittels der Kontaktsensoren an dem Ladestecker und/oder der Ladebuchse kann ein entsprechender mechanischer Kontakt bzw. eine mechanische Kopplung detektiert werden. Ferner kann die mechanische Kopplung mittels der oben beschriebenen optischen Sensoren festgestellt werden. Wird beispielsweise eine Entkopplung zwischen dem Ladestecker und der Ladebuchse festgestellt, kann die Kabelsteuervorrichtung selbsttätig das Ladekabel bzw. den Ladestecker in eine sichere Position außerhalb der Ladezone befördern. Beim Herausfahren des Fahrzeugs aus der Ladezone wird somit das Risiko einer Beschädigung des Ladekabels reduziert.

Gemäß einer weiteren beispielhaften Ausführungsform bildet das Kabelsteuerelement eine Steuerstange aus, welche längsverstellbar ausgebildet ist und/oder welche derart schwenkbar ist, dass das Ladekabel in die Ladezone hinein- und herausschwenkbar ist. Beispielsweise kann das Ladekabel an einem oder mehreren Befestigungspunkten an die Steuerstange gekoppelt werden. Zwischen den einzelnen Befestigungspunkten kann das Ladekabel Schlaufen aufweisen. Ist die Steuerstange beispielsweise in ihrer Länge reduziert, so sind große Schlaufen zwischen den Befestigungspunkten existent. Wenn die Steuerstange in ihrer Maximallänge ausgezogen ist, so kann das Ladekabel zwischen den Befestigungspunkten gespannt vorliegen. Die Steuerstange kann beispielsweise einklappbar oder teleskopartig einfahrbar ausgebildet sein.

Ferner kann die Steuerstange mittels eines Scharniers schwenkbar beispielsweise an der Trägerstruktur befestigt werden, um somit das Ladekabel in die Ladezone hinein- oder hinauszuschwenken. Die Längenveränderung bzw. das Schwenken der Steuerstange kann beispielsweise mittels eines elektrischen Aktuators von der Kabelsteuervorrichtung gesteuert werden.

Gemäß einer weiteren beispielhaften Ausführungsform ist die Kabelsteuervorrichtung an der Trägerstruktur befestigt. Ferner weist die Kabelsteuervorrichtung eine Seilzugvorrichtung auf, welche ein Trägerseil als Kabelsteuerelement aufweist. Das Trägerseil ist zwischen einem Aufhängepunkt des Ladekabels und der Trägerstruktur befestigt, wobei die Seilzugvorrichtung derart ausgebildet ist, dass die Länge des Trägerseils derart einstellbar ist, dass ein Abstand des ersten Aufhängepunkts zu einem Boden basierend auf der Ladesituation einstellbar ist.

An der Trägerstruktur, aufweisend beispielsweise ein Querträger, welcher quer über die Ladezone verläuft, ist die Seilzugvorrichtung befestigt. Die erste Seilzugvorrichtung weist das Trägerseil auf, welche das Ladekabel an dem Aufhängepunkt befestigt. Mit anderen Worten hängt das Ladekabel an dem Trägerseil von der Trägerstruktur herab. Das Trägerseil kann an dem ersten Aufhängepunkt beispielsweise lösbar oder unlösbar mit dem Ladekabel befestigt sein. Die Aufhängepunkte definieren den Abschnitt bzw. Punkt, an welchem das oder die Trägerseile an dem Ladekabel befestigt sind.

Die Trägerseile können beispielsweise aus Kunststoff oder aus natürlichen Materialien, wie beispielsweise aus Hanf hergestellt werden. Ferner können im Rahmen der vorliegenden Erfindung auch eine Kette, beispielsweise aus Metall, oder ein Band bzw. Riemen ein Trägerseil darstellen.

Über die Einstellung der Seillängen der Trägerseile wird der Bodenabstand zwischen den Aufhängepunkten und dem Boden individuell eingestellt. Somit kann in einem inaktiven Zustand, in dem die Sensorvorrichtung feststellt, dass kein Fahrzeug in der Ladezone positioniert ist, der Aufhängepunkt in Richtung Trägerstruktur eingestellt werden, so dass das Ladekabel bodenfern in der Nähe der Trägerstruktur vorliegt. Nachdem die Sensorvorrichtung feststellt, dass ein Fahrzeug insbesondere unter der Trägerstruktur rangiert hat und an einer vorbestimmten Position bzw. Ladeposition relativ zur Trägerstruktur positioniert ist, kann die freie Seillänge des Trägerseils gezielt vergrößert werden, so dass ein Benutzer den Ladestecker greifen kann und in die Ladebuchse des Fahrzeugs einstecken kann.

Gemäß einer weiteren beispielhaften Ausführungsform weist die Kabelsteuervorrichtung eine weitere Seilzugvorrichtung auf, welche ein weiteres Trägerseil als Kabelsteuerelement aufweist, wobei die weitere Seilzugvorrichtung an der Trägerstruktur beabstandet von der Seilzugvorrichtung befestigt ist. Das weitere Trägerseil ist zwischen einem weiteren Aufhängepunkt des Ladekabels , welcher beabstandet von dem Aufhängepunkt ausgebildet ist, und der Trägerstruktur befestigt, wobei die Seilzugvorrichtung und die weitere Seilzugvorrichtung jeweils derart ausgebildet sind, dass die Längen des Trägerseils und des weiteren Trägerseils unabhängig voneinander derart einstellbar sind, dass ein Abstand des Aufhängepunkts und des weiteren Aufhängepunkts zum Boden basierend auf der Ladesituation einstellbar sind.

Gemäß der beispielhaften Ausführungsform sind die Trägerseile beabstandet voneinander an der Trägerstruktur befestigt und halten entsprechende Abschnitte des Ladekabels an beabstandeten Aufhängepunkten. Jedes der Trägerseile kann den Abstand zwischen dem entsprechenden Aufhängepunkt und der Trägerstruktur individuell einstellen. Bei einer Anordnung mit zwei Seilzugvorrichtungen verläuft das Ladekabel zunächst von einem Kopplungspunkt an der Trägerstruktur zur ersten Seilzugvorrichtung, bzw. zu einer Kopplung an dem ersten Aufhängepunkt. Von dort verläuft das Ladekabel zu der zweiten Seilzugvorrichtung, bzw. zu dem zweiten Aufhängepunkt an dem zweiten Trägerseil. Von dem zweiten Aufhängepunkt verläuft das Ladekabel weiter bis zu seinem Ende, an welchen der Ladestecker angeordnet ist. In weiteren beispielhaften Ausführungsformen können nach dem zweiten Aufhängepunkt noch weitere Seilzugvorrichtungen mit weiteren Aufhängepunkten vorgesehen werden.

Entsprechend ist die Seilzugvorrichtung mit dem weiteren Trägerseil an dem Ladekabel in dem weiteren Aufhängepunkt, lösbar oder unlösbar, befestigt, so dass das Ladekabel mit dem weiteren Trägerseil an der Trägerstruktur aufgehängt ist. Je nach Position und Ausrichtung des Fahrzeugs in der Ladezone kann die Kabelsteuervorrichtung die Längen der Trägerseile einstellen, so dass nicht nur eine vertikale, sondern auch eine horizontale Position des Ladestecker automatisch eingestellt werden kann.

Gemäß einer weiteren beispielhaften Ausführungsform verläuft das Ladekabel von einem Kopplungspunkt mit der Trägerstruktur aus zu dem Aufhängepunkt und anschließend zu dem weiteren Aufhängepunkt, wobei das Ladekabel derart an der Trägerstruktur, der Seilzugvorrichtung und der weiteren Seilzugvorrichtung angeordnet ist, dass entlang einer horizontalen Richtungskomponente der Kopplungspunkt zwischen dem Aufhängepunkt und dem weiteren Aufhängepunkt vorliegt.

Mit anderen Worten hängt das Ladekabel zunächst von dem Kopplungspunkt von der Trägerstruktur herunter. Anschließend verläuft das Ladekabel zu dem ersten Aufhängepunkt, bildet eine Schlaufe und verläuft in Gegenrichtung zu dem zweiten Aufhängepunkt. Der Bereich des Ladekabels zwischen dem Kopplungspunkt und dem zweiten Aufhängepunkt bildet somit einen C-förmigen Verlauf. Der Bereich der Schlaufe am ersten Aufhängepunkt kann flexibel in Richtung Boden verstellt werden. Entsprechend kann auch der Bereich am Ladestecker bzw. am zweiten Aufhängepunkt variabel relativ zum Boden verstellt werden. Je nachdem, wie die Längenverhältnisse zwischen dem ersten Tragseil und dem zweiten Tragseil ausgebildet sind, kann die Form des Seilverlaufs des Ladekabels eingestellt werden. Da die Trägerseile verschiebefest, d. h. nicht entlang des Ladekabels verschiebbar, angeordnet sind, ändert eine unterschiedliche Einstellung der Seillängen der Trägerseile nicht nur eine vertikale Position der Aufhängepunkte über dem Boden, sondern ebenfalls eine horizontale Position der Aufhängepunkte und entsprechend des Ladesteckers. Mit dem beschriebenen Ausführungsbeispiel kann somit neben einer vertikalen Position ebenfalls eine horizontale Position des Wahlsteckers eingestellt werden, ohne dass eine hohe Muskelkraft des Benutzers notwendig ist und ohne, dass das Fahrzeug exakt an einer vorbestimmten Position zum Laden positioniert werden muss.

Gemäß einer weiteren beispielhaften Ausführungsform weist die Seilzugvorrichtung eine elektrische steuerbare Seilwinde auf, wobei die Seilwinde basierend auf der detektierten Ladesituation steuerbar ist. Damit wird insbesondere die Länge des entsprechenden Trägerseil eingestellt. Die Seilwinde weist beispielsweise einen elektrischen Antriebsmotor auf, der die Seilwinde entsprechend antreibt. Entsprechend kann auch die weitere Seilzugvorrichtung eine elektrische steuerbare Seilwinde aufweisen, die von der Kabelsteuervorrichtung gesteuert wird.

Somit können eine oder mehrere elektrische Seiten mit einer automatischen Belegungsdetektion bzw. der Sensorvorrichtung kombiniert werden. Somit kann durch die Belegungserkennung sichergestellt werden, dass sich ein Fahrzeug auf dem betreffenden Parkplatz bzw. der Ladezone befindet. Außerdem kann festgestellt werden, dass das Fahrzeug seine End-/Parkposition erreicht hat. Das kann wiederum als Trigger verwendet werden, das Ladekabel mithilfe der elektrischen Winde(n) herabzulassen, so dass es vom Fahrer oder einer anderen Person verwendet werden kann.

Darüberhinaus kann die Belegungserkennung auch genutzt werden um festzustellen, dass sich kein Fahrzeug in der Ladezone befindet, wodurch ein automatisches Hochziehen des Ladekabels mittels der Kabelsteuervorrichtung veranlasst werden kann. Neben der Belegungsdetektion kann auch das (mechanische) Abziehen des Ladekabels als Trigger verwendet werden. Dies kann durch die Überwachung der Ladekommunikation realisiert werden. Ein fehlerhaftes Hochziehen bzw. Herausziehen des Ladekabels aus der Ladezone, obwohl eine mechanische Kopplung zwischen dem Ladestecker und der Ladebuchse des Fahrzeugs noch besteht, kann zusätzlich durch eine Momentenbegrenzung in den elektrischen Seilwinden verhindert werden.

Der Vorteil gegenüber einem manuellen Anzeigen und damit Senken und Hochziehen des Ladesteckers ist die Zeitersparnis, Komfort und insbesondere Sicherheit. Einem menschlichen Fehler ("Vergessen das Kabel hochzuziehen") und damit möglichen Schäden am Kabel sowie dem Fahrzeug durch Rangieren auf engen Raum, kann durch die automatische Erkennung mittels der Sensorvorrichtung vorgebeugt werden.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind.

Unabhängig vom grammatikalischen Geschlecht eines bestimmten Begriffes sind Personen mit männlicher, weiblicher oder anderer Geschlechteridentität mit umfasst.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Figuren näher beschrieben.
Fig. 1 zeigt eine schematische Darstellung einer erfindungsgemäßen Vorrichtung, bei welcher in der Ladezone ein Fahrzeug vorliegt und mit dem Ladestecker gekoppelt ist.
Fig. 2 zeigt eine schematische Darstellung der Vorrichtung aus Fig. 1, wobei sich in der Ladezone kein Fahrzeug befindet.
Fig. 3 zeigt eine schematische Darstellung der Kabelsteuervorrichtung aufweisend zwei Seilzugvorrichtungen, wobei ein Fahrzeug in der Ladezone positioniert ist, gemäß einer beispielhaften Ausführungsform der vorliegenden Erfindung.
Fig. 4 zeigt eine schematische Darstellung der erfindungsgemäßen Vorrichtung aus Fig. 3, wobei sich in der Ladezone kein Fahrzeug befindet.

### Detaillierte Beschreibung von exemplarischen Ausführungsformen

Gleiche oder ähnliche Komponenten sind in den Figuren mit gleichen Bezugsziffern versehen. Die Darstellungen in den Figuren sind schematisch und nicht maßstäblich.

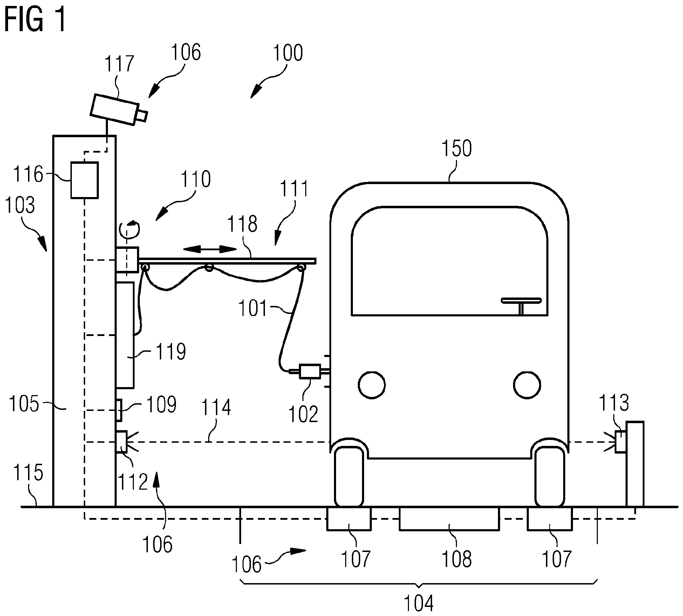

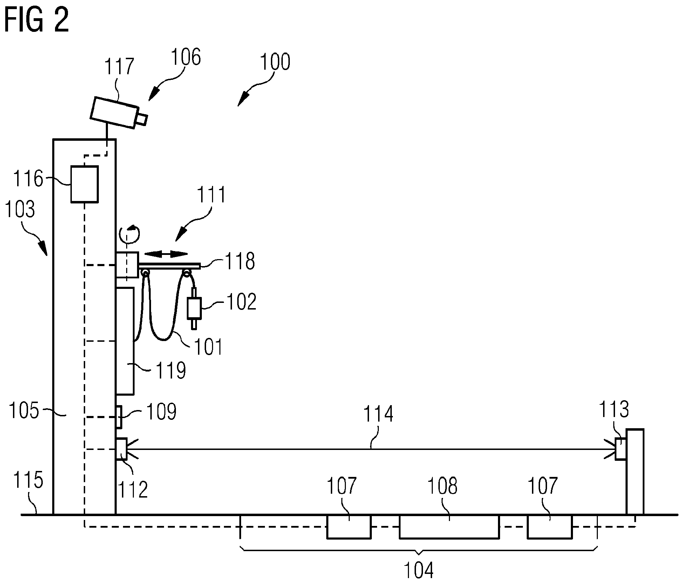

Fig. 1 zeigt eine schematische Darstellung einer erfindungsgemäßen Vorrichtung 100, bei welchen in der Ladezone 104 ein Fahrzeug 150 vorliegt und mit dem Ladestecker 102 gekoppelt ist. Fig. 2 zeigt eine schematische Darstellung der Vorrichtung 100 aus Fig. 1, wobei sich in der Ladezone 104 kein Fahrzeug 150 befindet.

Die Vorrichtung weist eine Trägerstruktur 103, welche an einer Ladezone 104 zum Laden eines Fahrzeugs 150 angeordnet ist, und ein Ladekabel 101, welches an eine Elektrizitätsquelle anschließbar ist und einen Ladestecker 102 zum Anstecken an einem zu ladenden Fahrzeug 150 aufweist, auf. Das Ladekabel 101 an der Trägerstruktur 103 befestigt ist. Die Vorrichtung 100 weist ferner eine Kabelsteuervorrichtung 110 mit einem Kabelsteuerelement 111 auf, welches mit dem Ladekabel 101 derart gekoppelt ist, dass das Ladekabel 101 relativ zur Trägerstruktur 103 bewegbar ist, um den Ladestecker 102 in der Ladezone 104 zu positionieren. Ferner weist die Vorrichtung 100 eine Sensorvorrichtung 106 zum Detektieren einer Ladesituation in der Ladezone 104 zum Laden eines Fahrzeugs 150 auf, wobei die Sensorvorrichtung 106 derart mit der Kabelsteuervorrichtung 110 gekoppelt ist, dass das Kabelsteuerelement 111 steuerbar ist, um den Ladestecker 102 in der Ladezone 104 basierend auf der detektierten Ladesituation in der Ladezone 104 zu positionieren.

Die Trägerstruktur 103 ist beispielsweise als Trägersäule bzw. Bodenstütze 105 am Boden 115 befestigt und neben der Ladezone 104 angeordnet. Die Trägerstruktur 103 dient zum Befestigen der Vorrichtungskomponenten an einem Gebäude oder an dem Boden 115. Die Trägerstruktur 103 trägt insbesondere das Ladekabel 101. Ferner ist an der Trägerstruktur 103 die Kabelsteuervorrichtung 110 mit dem entsprechenden Kabelsteuerelement 111 vorgesehen. Ferner können Sensorelemente, wie beispielsweise der dargestellte Radarsensor 109 oder die Lichtquelle 112, zum Detektieren der Ladesituation an der Trägerstruktur 103 angeordnet werden. Ferner ist an der Trägerstruktur 103 ein Ladeverteiler (Dispenser) 119 angeordnet, an welchem das Ladekabel 101 gekoppelt ist.

Die Kabelsteuervorrichtung 110 weist in dem dargestellten Ausführungsbeispiel eine Steuerstange 118 auf. Die Steuerstange 118 kann beispielsweise längsverstellbar ausgebildet sein und/oder derart schwenkbar an der Bodenstütze 105 angeordnet sein, dass das Ladekabel 101 in die Ladezone 104 hinein- und herausschwenkbar ist. Beispielsweise kann das Ladekabel 101 an einen oder mehreren Befestigungspunkten an die Steuerstange 118 gekoppelt werden. Zwischen den einzelnen Befestigungspunkten kann das Ladekabel 101 Schlaufen aufweisen. Ist die Steuerstange 118 beispielsweise in ihrer Länge reduziert (siehe Fig. 2), so sind große Schlaufen zwischen den Befestigungspunkten existent. Wenn die Steuerstange 118 in ihrer Maximallänge ausgezogen ist (z.B. Fig. 1), so kann das Ladekabel 101 zwischen den Befestigungspunkten nahezu gespannt vorliegen. Die Steuerstange 118 kann beispielsweise einklappbar oder teleskopartig einfahrbar ausgebildet werden. Ferner kann die Steuerstange 118 mittels eines Scharniers schwenkbar beispielsweise an der Liegestütze 105 befestigt werden, um somit das Ladekabel 101 in die Ladezone 104 hinein- oder hinauszuschwenken. Die Längenveränderung bzw. das Schwenken der Steuerstange 118 wird mittels eines elektrischen Aktuators von der Kabelsteuervorrichtung 110 gesteuert werden.

Die Sensorvorrichtung 106 ist zum Detektieren einer Ladesituation in der Ladezone 104 zum Laden eines Fahrzeugs 150 ausgebildet. Die Ladesituation beschreibt beispielsweise in einem ersten Aspekt, ob ein Fahrzeug 150 in der Ladezone positioniert ist. Ferner definiert die Ladesituation gemäß einem weiteren Aspekt beispielsweise die Ausrichtung und die Position des Fahrzeugs 150 innerhalb der Ladezone 104.

In Fig. 1 detektiert die Sensorvorrichtung 106, dass ein Fahrzeug 150 in der Ladezone 104 positioniert ist und entsprechend bereit zum Laden ist. Entsprechend ist die Steuerstange 118 herausgeschwenkt bzw. in die Ladezone 104 hineingeschwenkt, so dass ein Ladestecker 102 mit dem Fahrzeug 150 gekoppelt werden kann. In Fig. 2 befindet sich kein Fahrzeug 150 in der Ladezone 104, so dass die Kabelsteuervorrichtung 110 die Steuerstange 118 in ihrer Länge reduziert hat bzw. aus der Ladezone 104 herausgeschwenkt hat. Somit liegen das Ladekabel 101 und insbesondere der Ladestecker 102 außerhalb der Ladezone 104, so dass Beschädigungen aufgrund des Positionierens des Fahrzeugs 150 vermieden werden.

Eine gemeinsame Steuereinheit 116 ist vorgesehen, an welcher die Kabelsteuervorrichtung 110 und die Sensorvorrichtung 106 gekoppelt sind. Die Steuereinheit 116 kann entsprechende Sensorsignale von der Sensorvorrichtung 106 erhalten und verarbeiten. Basierend darauf kann die Steuereinheit 116 mit der Kabelsteuervorrichtung 110 gekoppelt sein, um Steuersignale an die Kabelsteuerelemente (d.h. die Steuerstange 118) zu übertragen, um diese zu steuern und entsprechend einzustellen.

Die Sensorvorrichtung 106 weist beispielsweise einen Gewichtssensor 107 auf, welcher im Boden 115 der Ladezone 104 installiert. Der Gewichtssensor 107 ist konfiguriert mittels Gewichtsmessung des Fahrzeugs 150 einen Belegungszustand der Ladezone 104 mit dem Fahrzeug 150 zu bestimmen.

Ferner können eine Vielzahl von Gewichtssensoren 107 in dem Boden 115 der Ladezone 101 angeordnet sein, so dass eine Matrix an Gewichtssensoren 107 vorliegt. In dem dargestellten Beispiel befinden sich beispielsweise zwei Vorderreifen auf entsprechenden Gewichtssensoren 107, so dass neben dem Vorhandensein ebenfalls eine exakte Position des Fahrzeugs 150 in der Ladezone 104 bestimmt werden kann.

Ferner kann die Sensorvorrichtung 106 einen kapazitiven Sensor 108 aufweisen, welcher im Boden 115 der Ladezone installiert ist. Der kapazitive Sensor 108 ist konfiguriert auf Basis der Veränderung einer elektrischen Kapazität (bzw. des elektrischen Feldes) einen Belegungszustand der Ladezone mit dem Fahrzeug zu bestimmen. In dem dargestellten Beispiel ändert sich das elektrische Feld über dem kapazitiven Sensor 108, wenn ein Fahrzeug 150 über diesen positioniert ist. Basierend darauf kann der Belegungszustand der Ladezone 104 bestimmt werden.

Ferner kann die Sensorvorrichtung 106 eine Lichtquelle 112 und einen Lichtsensor 113 zum Ausbilden einer Lichtschranke 114 aufweisen, wobei die Lichtquelle 112 und der Lichtsensor 113 konfiguriert sind, einen Belegungszustand der Ladezone 104 mit dem Fahrzeug 150 zu bestimmen. Die Lichtschranke 114 kann beispielsweise quer zu einer Einfahrrichtung des Fahrzeugs 150 in die Ladezone 104 ausgerichtet sein. Durchfährt das Fahrzeug die Lichtschranke 114 und bleibt insbesondere zwischen dem Lichtsensor 113 und der Lichtquelle 112 stehen (siehe Fig. 1), so kann ein Belegungszustand der Ladezone 104 festgestellt werden.

Ferner kann die Sensorvorrichtung 106 einen Radarsensor 109 aufweisen, wobei der Radarsensor 109 konfiguriert ist, einen Belegungszustand der Ladezone 104 mit dem Fahrzeug 150 zu bestimmen. Der Radarsensor 109 kann basierend auf Laufzeitmessung von ausgesendeten und am Fahrzeug 150 reflektierten Radarwellen die Belegungszustand der Ladezone 104 wie auch die Positionierung des Fahrzeugs 150 innerhalb der Ladezone 104 bestimmen.

Ferner kann die Sensorvorrichtung 106 einen optischen Sensor 117 bzw. eine Kamera aufweisen. Der optische Sensor 117 ist konfiguriert, einen Belegungszustand der Ladezone 104 mit dem Fahrzeug 150 zu bestimmen, indem die aufgenommenen Bilder entsprechend verarbeitet und analysiert werden.

Die Sensorvorrichtung 106 weist ferner beispielsweise einen Kontaktsensor auf, um eine mechanische Kopplung zwischen dem Ladestecker 102 und der Ladebuchse des Fahrzeugs 150 festzustellen. Ferner kann die Sensorvorrichtung 106 einen Stromsensor aufweisen, welcher einen Stromfluss zwischen dem Ladestecker 102 und dem Fahrzeug 150 detektiert. Findet beispielsweise ein Stromfluss zwischen dem Ladestecker 102 und dem Fahrzeug 150 statt, so kann davon ausgegangen werden, dass die Ladezone 104 mit einem Fahrzeug 150 belegt ist.

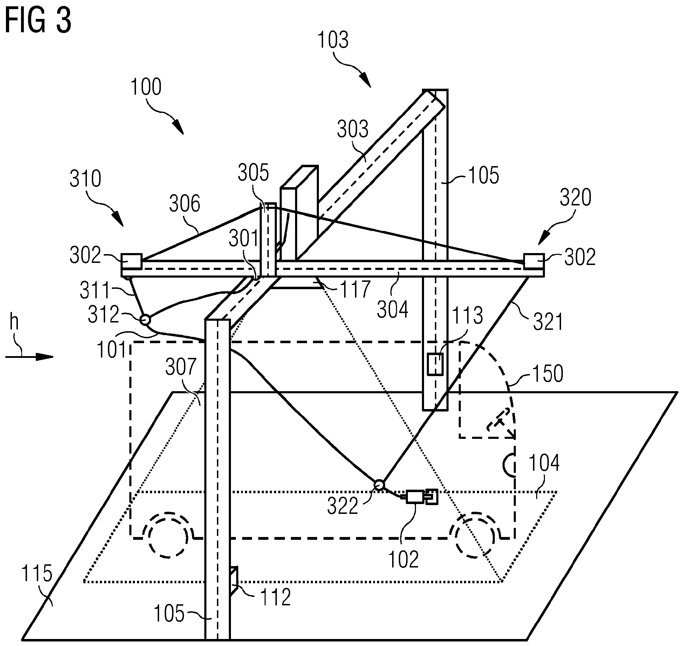

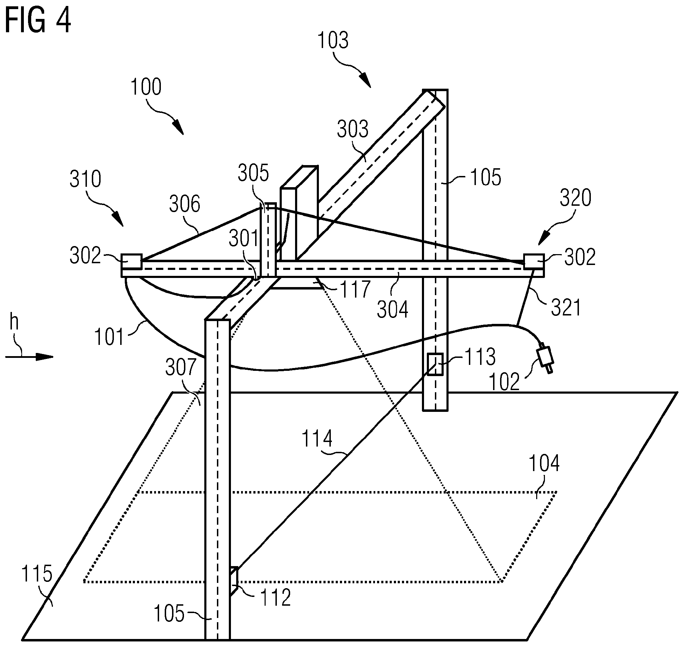

Fig. 3 zeigt eine schematische Darstellung der Kabelsteuervorrichtung 110 aufweisend zwei Seilzugvorrichtungen 310, 320, wobei ein Fahrzeug 150 in der Ladezone 140 positioniert ist. Fig. 4 zeigt eine schematische Darstellung der erfindungsgemäßen Vorrichtung 100 aus Fig. 3, wobei sich in der Ladezone 104 kein Fahrzeug 150 befindet.

Die Trägerstruktur 103 weist einen Querbalken 303 auf, an welchem eine Seilzugvorrichtung 310 und eine zweite Seilzugvorrichtung 320 der Kabelsteuervorrichtung 110 angeordnet sind. Der Querbalken 303 ist mittels zweier Bodenstützen 105, beispielsweise aus einer Stahlkonstruktion oder aus Beton, am Boden 115 befestigt, so dass an beiden Enden des Querbalkens 303 eine entsprechende Bodenstütze 105 vorgesehen ist.

Die Trägerstruktur 103 weist einen Ausleger 304 auf, an welchem die Seilzugvorrichtung 310 und die weitere Seilzugvorrichtung 320 angeordnet ist. Der Ausleger 304 ist an dem Querbalken 303 befestigt und ragt seitlich zur Erstreckungsrichtung des Querbalkens 303 heraus. Beispielsweise können an dem Querbalken 303 Ladekomponenten, wie beispielsweise ein Ladungsverteiler (Dispenser) 119, angeordnet werden, wobei die Seilzugvorrichtungen 310, 320 beabstandet voneinander an dem Ausleger 304 befestigt sind. Der Ausleger 106 kann beispielsweise aus einem Vollmaterial bestehen oder einen Fachwerkträger darstellen.

Insbesondere ist der Ausleger 304 rechtwinklig zur der Erstreckungsrichtung des Querbalkens 104 ausgebildet. Das Fahrzeug 150 kann beispielsweise entlang einer vorbestimmten Einfahrrichtung in die Vorrichtung 100 einfahren. Der Querbalken 303 erstreckt sich beispielsweise quer zu der Einfahrrichtung, so dass das Fahrzeug 150 unter dem Querbalken 303 positioniert werden kann. Der Ausleger 304, welcher sich insbesondere rechtwinklig von dem Querbalken 303 erstreckt, verläuft somit parallel zur Einfahrrichtung und somit entlang einer Seitenfläche des positionierten Fahrzeugs 150. Die an dem Ausleger 304 beabstandet angeordneten Seilzugvorrichtungen 310, 320 verlaufen somit entlang der Seitenfläche des positionierten Fahrzeugs 150. Mittels Einstellens der Längen der entsprechenden Trägerseile 311, 312 der Seilzugvorrichtungen 310, 320 kann somit die Position des Ladesteckers 102 entlang der Seitenflächen des Fahrzeugs 150 eingestellt werden.

Die erste Seilzugvorrichtung 310 weist das erste Trägerseil 311 auf, welche das Ladekabel 101 an dem ersten Aufhängepunkt 312 befestigt. Mit anderen Worten hängt das Ladekabel 101 an dem Trägerseil 311 von dem Ausleger 304 herab. Das erste Trägerseil 311 kann an dem ersten Aufhängepunkt 312 beispielsweise lösbar oder unlösbar mit dem Ladekabel 101 befestigt sein. Entsprechend ist die weitere Seilzugvorrichtung 320 mit dem weiteren Trägerseil 321 an dem Ladekabel 101 in den zweiten Aufhängepunkt 322, lösbar oder unlösbar, befestigt, so dass das Ladekabel 101 mit dem zweiten Trägerseil 321 an dem Ausleger 304 aufgehängt ist.

Jedes der Trägerseile 311, 321 kann den Abstand zwischen dem entsprechenden Aufhängepunkt 312, 322 und der Trägerstruktur 103 individuell einstellen. Bei einer Anordnung mit zwei Seilzugvorrichtungen 310, 320 verläuft das Ladekabel 101 zunächst von einem Kopplungspunkt 301 an der Trägerstruktur 103 immer beispielsweise an dem Querbalken 303 oder dem Ausleger 304 zur ersten Seilzugvorrichtung 310, bzw. zu einer Kopplung an dem ersten Aufhängepunkt 312. Von dort verläuft das Ladekabel 101 zu der weiteren Seilzugvorrichtung 320, bzw. zu dem weiteren Aufhängepunkt 322 an dem weiteren Trägerseil 321. Von dem weiteren Aufhängepunkt 322 verläuft das Ladekabel 101 weiter bis zu seinem Ende, an welchem der Ladestecker 102 angeordnet ist.

Über die Einstellung der Seillängen der Trägerseile 311, 321 wird der Bodenabstand zwischen den Aufhängepunkten 312, 322 und den Boden 115 individuell eingestellt. Somit können in einem inaktiven Zustand, in dem kein Fahrzeug 150 an der Vorrichtung 110 platziert ist (siehe Fig. 4), die Aufhängepunkte 312, 322 in Richtung Trägerstruktur 103 eingestellt werden, so dass das Ladekabel 101 bodenfern in der Nähe der Trägerstruktur 103 vorliegt. Nachdem ein Fahrzeug 150 insbesondere unter dem Querbalken 303 rangiert hat und an einer vorbestimmten Position bzw. Ladeposition relativ zur Trägerstruktur 103 positioniert ist, können die Seillängen der Trägerseile 311, 321 gezielt vergrößert werden, so dass ein Benutzer den Ladestecker 102 greifen kann und in die Ladebuchse des Fahrzeugs 115 einstecken kann (Fig. 3).

Das Ladekabel 101 ist derart konfiguriert, dass das Ladekabel 101 von dem Kopplungspunkt 301 aus zu dem ersten Aufhängepunkt 312 und anschließend zu dem zweiten Aufhängepunkt 322 verläuft, wobei das Ladekabel 101 derart an der Trägerstruktur 103, der Seilzugvorrichtung 310 und der weiteren Seilzugvorrichtung 320 angeordnet ist, dass entlang einer horizontalen Richtungskomponente h der Kopplungspunkt 301 zwischen dem ersten Aufhängepunkt 311 und dem weiteren Aufhängepunkt 322 vorliegt. Das Ladekabel 101 hängt zunächst von dem Kopplungspunkt 101 von dem Querbalken 303 der Trägerstruktur 103 herunter. Anschließend verläuft das Ladekabel 101 zu dem ersten Aufhängepunkt 312, bildet eine Schlaufe und verläuft in Gegenrichtung zu dem weiteren Aufhängepunkt 322. Der Bereich des Ladekabels 101 zwischen dem Kopplungspunkt 301 und dem weiteren Aufhängepunkt 322 bildet somit einen C-förmigen Verlauf. Der Bereich der Schlaufe am Aufhängepunkt 312 kann flexibel basierend auf den detektierten Sensordaten der Sensorvorrichtung 106 in Richtung Boden 115 verstellt werden. Entsprechend kann auch der Bereich am Ladestecker 102 bzw. am weiteren Aufhängepunkt 322 flexiblen Richtung Boden 115 verstellt werden. Je nachdem, wie die Längenverhältnisse zwischen dem Tragseil 311 und dem weiteren Tragseil 312 ausgebildet sind, kann die Form des Seilverlaufs des Ladekabels 101 eingestellt werden.

Der Ausleger 304 weist zwischen zwei Auslegerenden einen Verstärkungsbalken 305 auf, welcher senkrecht nach oben, gegenüberliegend zum Boden 115, von dem Ausleger 304 hervorsteht. Ein gespanntes Verstärkungsseil 306 verbindet die Auslegerenden und den Verstärkungsbalken 305 zur Stabilisierung des Auslegers 304.

Die Seilzugvorrichtung 310 und die zweite Seilzugvorrichtung 320 weisen jeweils eine elektrische Seilwinde 302 auf. Die Seilwinden 302 können entsprechend die Trägerseile 311, 321 aufrollen und abwickeln. Die entsprechenden Seilwinden 302 können mittels der Kabelsteuervorrichtung 110 basierend auf den Sensordaten der Sensorvorrichtung 106 gesteuert werden.

Die Sensorvorrichtung 106 kann entsprechende Sensoren wie in dem Ausführungsbeispiel aus Fig. 1 aufweisen. In Fig. 3 und Fig. 4 wird insbesondere ein Bildbereich 307 einer Kamera 117 dargestellt. Der Bildbereich 307 definiert ein Abbild der Ladezone 104 oder entsprechende Videosequenzen der Ladezone 104. Basierend auf den Bilddaten bzw. Videosequenzen der Kamera 117 kann der Belegungszustand der Ladezone 104 bestimmt werden. Die Sensorvorrichtung 106 kann ferner eine Bildverarbeitungsvorrichtung aufweisen, welches konfiguriert ist basierend auf einer Bildanalyse eine Ladebuchse des Fahrzeugs 150 zu erkennen und basierend darauf die Kabelsteuervorrichtung 110 zu steuern. Die Bildverarbeitungsvorrichtung kann anhand der aufgenommenen Bilddaten beispielsweise eine Ladebuchse bzw. eine Verschlussklappe einer Ladebuchse eines Fahrzeugs 150 bestimmen, so dass basierend darauf die Kabelsteuervorrichtung 110 den Ladestecker 102 bereits in der Nähe der Ladebuchse positionieren kann.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

Unabhängig vom grammatikalischen Geschlecht eines bestimmten Begriffes sind Personen mit männlicher, weiblicher oder anderer Geschlechteridentität mit umfasst.

### Bezugszeichenliste

- 100: Vorrichtung
- 101: Ladekabel
- 102: Ladestecker
- 103: Trägerstruktur
- 104: Ladezone
- 105: Bodenstütze
- 106: Sensorvorrichtung
- 107: Gewichtssensor
- 108: kapazitiver Sensor
- 109: Radarsensor
- 110: Kabelsteuervorrichtung
- 111: Kabelsteuerelement
- 112: Lichtquelle
- 113: Lichtsensor
- 114: Lichtschranke
- 115: Boden
- 116: Steuereinheit
- 117: optischer Sensor/Kamera
- 118: Steuerstange
- 119: Ladeverteiler
- 150: Fahrzeug
- 301: Kopplungspunkt
- 302: Seilwinde
- 303: Querbalken
- 304: Ausleger
- 305: Verstärkungsbalken
- 306: Verstärkungsseil
- 307: Bildbereich
- 310: Seilzugvorrichtung
- 311: Trägerseil
- 312: Aufhängepunkt
- 320: weitere Seilzugvorrichtung
- 321: weiteres Trägerseil
- 322: weiterer Aufhängepunkt
- h: horizontale Richtungskomponente

## Patentansprüche

1. Vorrichtung (100) zum Bereitstellen eines Ladekabels (101) für ein Fahrzeug (150), die Vorrichtung (100) aufweisend,
eine Trägerstruktur (103), welche dazu ausgebildet ist, an einer Ladezone (104) zum Laden eines Fahrzeugs (150) angeordnet zu werden,
ein Ladekabel (101), welches mit einer Elektrizitätsquelle verbunden oder verbindbar ist und einen Ladestecker (102) zum Anstecken an ein zu ladendes Fahrzeug (150) aufweist,
wobei das Ladekabel (101) an der Trägerstruktur (103) befestigt ist,
eine Kabelsteuervorrichtung (110) mit einem Kabelsteuerelement (111), welches mit dem Ladekabel (101) derart gekoppelt ist, dass das Ladekabel (101) relativ zur Trägerstruktur (103) bewegbar ist, um den Ladestecker (102) in der Ladezone (104) zu positionieren,
eine Sensorvorrichtung (106) zum Detektieren einer Ladesituation in der Ladezone (104) zum Laden eines Fahrzeugs (150),
wobei die Sensorvorrichtung (106) derart mit der Kabelsteuervorrichtung (110) gekoppelt ist, dass das Kabelsteuerelement (111) steuerbar ist, um den Ladestecker (102) in der Ladezone (104) basierend auf der detektierten Ladesituation in der Ladezone (104) zu positionieren.

2. Vorrichtung (100) gemäß dem vorhergehenden Anspruch,
bei der die Ladesituation einen Belegungszustand beschreibt, ob sich ein Fahrzeug (150) in der Ladezone (104) befindet, und
bei der die Sensorvorrichtung (106) konfiguriert ist, die Belegung der Ladezone (104) mit dem Fahrzeug (150) zu bestimmen und basierend auf dem Belegungszustand die Kabelsteuervorrichtung (110) zu steuern.

3. Vorrichtung (100) gemäß einem der vorhergehenden Ansprüche,
bei der die Sensorvorrichtung (106) konfiguriert ist, die Position und Ausrichtung des Fahrzeugs (150), insbesondere einer Ladebuchse des Fahrzeugs, in der Ladezone (104) zu bestimmen und basierend auf der bestimmten Position und Ausrichtung des Fahrzeugs (150) die Kabelsteuervorrichtung (110) derart zu steuern, dass die Position des Ladesteckers (102) relativ zu der Position des Fahrzeugs (150) einstellbar ist.

4. Vorrichtung (100) gemäß einem der vorhergehenden Ansprüche,
bei der die Sensorvorrichtung (106) einen Gewichtssensor (106) aufweist, welcher in einem Bodenbereich der Ladezone (104) installierbar ist, und
bei der der Gewichtssensor (107) konfiguriert ist, mittels Gewichtsmessung des Fahrzeugs (150) einen Belegungszustand der Ladezone (104) mit dem Fahrzeug (150) zu bestimmen, und/oder die Position und Ausrichtung des Fahrzeugs (150) in der Ladezone (104) zu bestimmen.

5. Vorrichtung (100) gemäß einem der vorhergehenden Ansprüche,
bei der die Sensorvorrichtung (106) einen kapazitiven Sensor (108) aufweist, welcher in einem Bodenbereich der Ladezone (104) installierbar ist, und
bei der der kapazitive Sensor (108) konfiguriert ist, auf Basis der Veränderung einer elektrischen Kapazität einen Belegungszustand der Ladezone (104) mit dem Fahrzeug (150) zu bestimmen, und/oder die Position und Ausrichtung des Fahrzeugs (150) in der Ladezone (104) zu bestimmen.

6. Vorrichtung (100) gemäß einem der vorhergehenden Ansprüche,
bei der die Sensorvorrichtung (106) eine Lichtquelle (112) und einen Lichtsensor (113) zum Ausbilden einer Lichtschranke (114) aufweist, und
bei der die Lichtquelle (112) und der Lichtsensor (113) konfiguriert sind, einen Belegungszustand der Ladezone (104) mit dem Fahrzeug (150) zu bestimmen, und/oder die Position und Ausrichtung des Fahrzeugs (150) in der Ladezone (104) zu bestimmen.

7. Vorrichtung (100) gemäß einem der vorhergehenden Ansprüche,
bei der die Sensorvorrichtung (106) einen Radarsensor (109) aufweist, und
bei der der Radarsensor (109) konfiguriert ist, einen Belegungszustand der Ladezone (104) mit dem Fahrzeug (150) zu bestimmen, und/oder die Position und Ausrichtung des Fahrzeugs (150) in der Ladezone (104) zu bestimmen.

8. Vorrichtung (100) gemäß einem der vorhergehenden Ansprüche,
bei der die Sensorvorrichtung (106) einen optischen Sensor (117) aufweist, und
bei der der optische Sensor (117) konfiguriert ist, einen Belegungszustand der Ladezone (104) mit dem Fahrzeug (150) zu bestimmen, und/oder die Position und Ausrichtung des Fahrzeugs (150) in der Ladezone (104) zu bestimmen.

9. Vorrichtung (100) gemäß dem vorhergehenden Anspruch,
bei der die Sensorvorrichtung (106) eine Bildverarbeitungsvorrichtung aufweist, welches konfiguriert ist, basierend auf einer Bildanalyse einer Ladebuchse des Fahrzeugs (150) zu erkennen und basierend darauf die Kabelsteuervorrichtung (110) zu steuern.

10. Vorrichtung (100) gemäß einem der vorhergehenden Ansprüche,
bei der die Ladesituation einen Ladezustand zwischen dem Ladestecker (102) und dem Fahrzeug (150) beschreibt,
bei der der Ladezustand eine Kopplung des Ladesteckers (102) mit dem Fahrzeug (150) und/oder einen Ladungsstromfluss zwischen dem Ladestecker (102) und dem Fahrzeug (150) beschreibt, und
bei der die Sensorvorrichtung (106) konfiguriert ist, den Ladezustand zu bestimmen und basierend auf dem Ladezustand die Kabelsteuervorrichtung (110) zu steuern.

11. Vorrichtung (100) gemäß dem vorhergehenden Anspruch,
bei der die Sensorvorrichtung (106) zum Bestimmen des Ladezustands einen Stromsensor aufweist, welcher einen Stromfluss zwischen dem Ladestecker (102) und dem Fahrzeug (150) bestimmt, und/oder
bei der die Sensorvorrichtung (106) einen Kontaktsensor aufweist zum Detektieren einer Kopplung zwischen dem Ladestecker (102) und dem Fahrzeug (150).

12. Vorrichtung (100) gemäß einem der vorhergehenden Ansprüche,
bei der das Kabelsteuerelement (111) eine Steuerstange (118) ausbildet, welche längsverstellbar ausgebildet ist und/oder welche derart schwenkbar ist, dass das Ladekabel (101) in die Ladezone (104) hinein- und herausschwenkbar ist.

13. Vorrichtung (100) gemäß einem der vorhergehenden Ansprüche,
bei der die Kabelsteuervorrichtung (110) an der Trägerstruktur (103) befestigt ist und eine Seilzugvorrichtung (310) aufweist, welche ein Trägerseil als Kabelsteuerelement (111) aufweist,
bei der das Trägerseil zwischen einem Aufhängepunkt (312) des Ladekabels (101) und der Trägerstruktur (103) befestigt ist, und
bei der die Seilzugvorrichtung (310) dazu ausgebildet ist, die Länge des Trägerseils (311) derart einzustellen, dass ein Abstand des ersten Aufhängepunkts (312) zu einem Boden (115) basierend auf der Ladesituation einstellbar ist.

14. Vorrichtung (100) gemäß dem vorhergehenden Anspruch,
bei der die Kabelsteuervorrichtung (110) eine weitere Seilzugvorrichtung (320) aufweist, welche ein weiteres Trägerseil als Kabelsteuerelement (111) aufweist,
bei der die weitere Seilzugvorrichtung (320) an der Trägerstruktur (103) beabstandet von der Seilzugvorrichtung (310) befestigt ist,
bei der das weitere Trägerseil (321) zwischen einem weiteren Aufhängepunkt (322) des Ladekabels (101), welcher beabstandet von dem Aufhängepunkt (312) ausgebildet ist, und der Trägerstruktur (103) befestigt ist, und
bei der die Seilzugvorrichtung (310) und die weitere Seilzugvorrichtung (320) jeweils derart ausgebildet sind, dass die Längen des Trägerseils (311) und des weiteren Trägerseils (321) unabhängig voneinander derart einstellbar sind, dass ein Abstand des Aufhängepunkts (312) und des weiteren Aufhängepunkts (322) zum Boden (115) basierend auf der Ladesituation einstellbar sind.

15. Vorrichtung (100) gemäß dem vorhergehenden Anspruch,
bei der das Ladekabel (101) von einem Kopplungspunkt (301) mit der Trägerstruktur (103) aus zu dem Aufhängepunkt (312) und anschließend zu dem weiteren Aufhängepunkt (322) verläuft, und
bei der das Ladekabel (101) derart an der Trägerstruktur (103), der Seilzugvorrichtung (310) und der weiteren Seilzugvorrichtung (320) angeordnet ist, dass entlang einer horizontalen Richtungskomponente (h) der Kopplungspunkt (301) zwischen dem Aufhängepunkt (312) und dem weiteren Aufhängepunkt (322) vorliegt.

16. Vorrichtung (100) gemäß einem der Ansprüche 12 bis 15, bei der die Seilzugvorrichtung (310) eine elektrische steuerbare Seilwinde (302) aufweist, und
bei der die Seilwinde (302) basierend auf der detektierten Ladesituation steuerbar ist.

17. Verfahren zum Bereitstellen eines Ladekabels (101) für ein Fahrzeug (150) mit einer Vorrichtung (100) gemäß einem der vorhergehenden Ansprüche, das Verfahren wenigstens die folgenden Schritte aufweisend,
Detektieren einer Ladesituation in der Ladezone (104) zum Laden eines Fahrzeugs (150) mittels der Sensorvorrichtung (106), und
Positionieren des Ladesteckers (102) in der Ladezone (104) basierend auf der Ladesituation in der Ladezone (104) mittels des Kabelsteuerelements (111).
